(19) Europäisches Patentamt / European Patent Office / Office européen des brevets

(11) **EP 1 404 553 B1**

(12) **EUROPÄISCHE PATENTSCHRIFT**

(45) Veröffentlichungstag und Bekanntmachung des Hinweises auf die Patenterteilung:
**14.11.2012  Patentblatt 2012/46**

(21) Anmeldenummer: **02751089.0**

(22) Anmeldetag: **28.06.2002**

(51) Int Cl.:
*B60T 8/1755* (2006.01)

(86) Internationale Anmeldenummer:
**PCT/EP2002/007173**

(87) Internationale Veröffentlichungsnummer:
**WO 2003/002392 (09.01.2003 Gazette 2003/02)**

(54) **VERFAHREN ZUM MODIFIZIEREN EINER FAHRSTABILITÄTSREGELUNG EINES FAHRZEUGS**

METHOD FOR MODIFYING A DRIVING STABILITY CONTROL OF A VEHICLE

PROCEDE PERMETTANT DE MODIFIER LE SYSTEME DE REGULATION DE LA STABILITE DIRECTIONNELLE D'UN VEHICULE

(84) Benannte Vertragsstaaten:
**DE FR IT**

(30) Priorität: **28.06.2001   DE 10130663**

(43) Veröffentlichungstag der Anmeldung:
**07.04.2004   Patentblatt 2004/15**

(73) Patentinhaber: **Continental Teves AG & Co. oHG**
**60488 Frankfurt am Main (DE)**

(72) Erfinder:
• **GRONAU, Ralph**
  **35083 Wetter (DE)**
• **HERRMANN, Torsten**
  **60487 Frankfurt/Main (DE)**

• **KOST, Artur**
  **65812 Bad Soden (DE)**
• **WANKE, Peter**
  **60437 Frankfurt (DE)**

(74) Vertreter: **Graf, Ulrich**
**Continental Teves AG & Co.oHG**
**Guerickestrasse 7**
**60488 Frankfurt am Main (DE)**

(56) Entgegenhaltungen:
EP-A- 0 392 165      EP-A- 0 829 401
EP-A- 0 995 656      WO-A-01/19653
DE-A- 19 907 633     DE-A- 19 909 453
DE-A1- 4 446 582     US-A- 5 671 143
US-A- 5 832 402

**Beschreibung**

Die Erfindung betrifft ein Verfahren zum Modifizieren einer Fahrstabilitätsregelung eines Fahrzeugs, bei dem die im wesentlichen aus dem vorgegebenen Lenkwinkel ($\delta$) und der Fahrgeschwindigkeit (v) bestehenden Eingangsgrößen aufgrund eines durch Fahreigenschaften bestimmten Fahrzeugmodells in einen Sollwert der Gierwinkelgeschwindigkeit ($\dot\psi_{soll}$) umgerechnet und dieser mit einem gemessenen Istwert der Gierwinkelgeschwindigkeit ($\dot\psi_{mess}$) verglichen wird, wobei nach Maßgabe des Vergleichsergebnisses in einem ESP Regler ein zusätzliches Giermoment ($M_G$) berechnet wird, welches zur Festlegung eines ESP-Eingriffs dient, der über in die Radbremsen des Fahrzeugs eingesteuerte Druckgrößen ein Zusatzgiermoment erzeugt, welches die gemessene Gierwinkelgeschwindigkeit ($\dot\psi_{mess}$) zu der errechneten Gierwinkelgeschwindigkeit ($\dot\psi_{soll}$) hinführt, wobei ein modellbasierter Reibwert ermittelt wird, dessen Ausgangssignale ($\mu$) dem Fahrzeugmodell zugeführt werden und damit bei der Berechnung des Sollwerts der Gierwinkelgeschwindigkeit ($\dot\psi_{soll}$) berücksichtigt wird. Sie betrifft außerdem eine Einrichtung zur Kippverhinderung eines Fahrzeugs um seine Längsachse durch eine ESP-Regelung.

Eine nicht angepaßte Fahrzeuggeschwindigkeit kann in gegebenen Fahrsituationen zu Fahrzeuginstabilitäten führen. Es sind verschiedene Fahrstabilitätsregelungen bekannt geworden, die das Ziel haben, den Fahrzeuginstabilitäten selbsttätig entgegenzuwirken.

Grundsätzlich lassen sich fünf Prinzipien unterscheiden, die das Fahrverhalten eines Fahrzeugs mittels vorgebbarer Drücke bzw. Bremskräfte in oder an einzelnen Radbremsen und mittels Eingriff in das Motormanagement des Antriebsmotors beeinflussen. Dabei handelt es sich um Bremsschlupfregelung (ABS), welche während eines Bremsvorgangs das Blockieren einzelner Räder verhindern soll, um Antriebsschlupfregelung (ASR), welche das Durchdrehen der angetriebenen Räder verhindert, um elektronische Bremskraftverteilung (EBV), welche das Verhältnis der Bremskräfte zwischen Vorder- und Hinterachse des Fahrzeugs regelt, um eine Kippregelung (ARB), die ein Kippen des Fahrzeugs um seine Längsachse verhindert, sowie um eine Giermomentregelung (ESP), welche für stabile Fahrzustände beim Gieren des Fahrzeugs um die Hochachse sorgt. Mit Fahrzeug ist also in diesem Zusammenhang ein Kraftfahrzeug mit vier Rädern gemeint, welches mit einer hydraulischen, elektro-hydraulischen oder elektro-mechanischen Bremsanlage ausgerüstet ist. In der hydraulischen Bremsanlage kann mittels eines pedalbetätigten Hauptzylinders vom Fahrer ein Bremsdruck aufgebaut werden, während die elektro-hydraulischen und elektro-mechanischen Bremsanlagen eine vom sensierten Fahrerbremswunsch abhängige Bremskraft aufbauen.

Weiterhin ist das Fahrzeug mit einer thermodynamischen oder elektrischen Antriebsanlage ausgestattet, die ein vom Fahrerwunsch abhängiges Vortriebsmoment über den Antriebsstrang auf mindestens ein Rad des Fahrzeugs aufbringt.

Zur Erfassung von fahrdynamischen Zuständen sind vier Drehzahlsensoren, pro Rad einer, ein Giergeschwindigkeitssensor, ein Querbeschleunigungssensor und mindestens ein Drucksensor für den vom Bremspedal erzeugten Bremsdruck vorhanden. Dabei kann der Drucksensor auch ersetzt sein durch einen Pedalweg- oder Pedalkraftmesser, falls die Hilfsdruckquelle derart angeordnet ist, daß ein vom Fahrer aufgebauter Bremsdruck von dem der Hilfsdruckquelle nicht unterscheidbar ist. Zusätzlich werden das aktuell von der Antriebsanlage erzeugte Antriebsmoment und das vom Fahrer gewünschte Moment bestimmt. Dabei kann es sich auch um indirekt ermittelte Größen handeln, die beispielsweise aus einem Motorkennfeld abgeleitet werden.

Bei einer Fahrstabilitätsregelung wird das Fahrverhalten eines Fahrzeugs derart beeinflußt, daß es für den Fahrer in kritischen Situationen besser beherrschbar wird. Eine kritische Situation ist hierbei ein instabiler Fahrzustand, in welchem im Extremfall das Fahrzeug den Vorgaben des Fahrers nicht folgt. Die Funktion der Fahrstabilitätsregelung besteht also darin, innerhalb der physikalischen Grenzen in derartigen Situationen dem Fahrzeug das vom Fahrer gewünschte Fahrzeugverhalten zu verleihen. Während für die Breinsschlupfregelung, die Antriebsschlupfregelung und die elektronische Bremskraftverteilung in erster Linie der Längsschlupf der Reifen auf der Fahrbahn von Bedeutung ist, fließen in die ESP Regelung (ESP) weitere Größen ein, beispielsweise die Gierwinkelgeschwindigkeit und die Schwimmwinkelgeschwindigkeit.

Aus dem US-Patent 5,671,143 ist ein Fahrstabilitätsregelsystem bekannt, welches Mittel zur Ermittlung eines Reibwerts, Mittel zur Berechnung einer Sollgierrate und eines Gierratengrenzwerts anhand eines Fahrzeugreferenzmodells, Mittel zur Ermittlung einer Differenz zwischen Sollgierrate und gemessener Gierrate, einen Gierratenregler, um ein Drehmoment zu bestimmen, welches die gemessene Gierrate an die Sollgierrate annähert, und Mittel zur Ermittlung von Druckänderungen an den Radbremsen des Fahrzeugs umfasst, um das bestimmte Drehmoment zu erzeugen. Auch die DE 44 46 582 A1 offenbart ein Fahrdynamikregelsystem mit einer Reibwerterkennung.

Alle Fahrzeuge, deren Schwerpunkthöhe im Verhältnis zur Spurbreite einen kritischen Wert überschreitet (typischerweise SUVs, Geländewagen etc.), können bei Überschreiten eines kritischen Querbeschleunigungswerts in einen instabilen Rollzustand, das sogenannte Kippen geraten. Dieser Grenzwert kann z.B. durch Erhöhung der Fahrzeugmasse im Rahmen der maximal zulässigen Zuladung und meist infolgedessen Anhebung des Fahrzeugschwerpunkts in Bereiche abgesenkt werden, die bei nicht situationsgerechter Fahrweise im Betrieb auch bei quasistationärer Kurvenfahrt erreicht werden können. Mit einer nicht situationsgerechten Fahrweise ist gemeint, dass der Fahrer dem Kurvenverlauf mit einer Geschwindigkeit folgt, die infolge des notwendigen Lenkwinkels für den vorgegebenen Kurvenradius zu einer zu großen Querbeschleunigung führt. Möglich ist natürlich auch der - allerdings in der Praxis weniger häufig vertretene - Fall, dass der Fahrer nicht einem Kurvenverlauf zu folgen hat, sondern den Lenkwinkel frei vorgibt und durch diese Vorgabe für seine aktuelle Geschwindigkeit in nicht zulässige Querbeschleunigungsbereiche vordringt (z.B. langsames Zuziehen des Lenkrads während eines Wendevorgangs auf einem Parkplatz). Eine ansteigende Geschwindigkeit bei konstantem Kurvenradius kann ebenfalls die kritische Kippsituation herbeiführen.

Der Erfindung liegt die Aufgabe zugrunde, ein Verfahren und eine Regelung zur Vermeidung von kippkritischen Situationen anzugeben, wobei der vom Fahrer vorgegebenen Idealkurs weitestgehend beibehalten werden soll.

Diese Aufgabe wird erfindungsgemäß dadurch gelöst, daß der Reibwert in Abhängigkeit von Größen, die mindestens eine Grenzquerbeschleunigung oder davon abgeleitete Größen wiedergeben, dann auf einen Wert unterhalb des maximal zulässigen Reibwertes ($\mu_{max}$) begrenzt wird, wenn eine kippkritische Situation erkannt wird.

Hierdurch wird eine gezielte Querbeschleunigungsbegrenzung zur Vermeidung von Kippgefahren möglich.

Vorteilhafte Weiterbildungen der Erfindung sind in den Unteransprüchen angegeben.

Gegenstand der Erfindung ist ferner, eine ESP-Regelung so zu modifizieren, daß die ESP-Regelung bei einem nach ESP Kriterien noch stabilen Fahrverhalten eines Fahrzeugs nach Maßgabe einer Begrenzung einer Eingangsgröße eines die Fahreigenschaften bestimmenden Referenzmodells, insbesondere des linearen Einspurmodells, vorzugsweise nach einem der Ansprüche 1 bis 6, in die Regelung eintritt. Als Eingangsgrößen werden bevorzugt die Querbeschleunigung, der Reibwert und/oder die Lenkwinkelgeschwindigkeit limitiert.

Wird bei einer Kurvenfahrt (quasistationäre Kreisfahrt) eine, einen kritischen Wert überschreitende Querbeschleunigung ermittelt, was durch den Lenkwinkel und die Gierrate plausibilisiert wird, startet ein Sonderregelmodus dieser ESP-Regelung. In diesem Sonderregelmodus regelt die ESP-Regelung das Fahrverhalten des Fahrzeugs zu einem Zeitpunkt, in dem nach den ESP Kriterien noch ein stabiles Fahrverhalten vorliegt. Es wird im Sonderregelmodus zwar eine Soll-Gierrate gemäß dem gewählten Fahrzeugreferenzmodell zur Vorgabe gemacht, jedoch wird dieses Fahrzeugreferenzmodell nach Maßgabe einer Eingangsgröße, vorzugsweise einem Grenzwert der Querbeschleunigung, des Reibwerts und/oder der Lenkwinkelgeschwindigkeit, derart verstimmt, daß die Regelung bereits bei dem stabilen Fahrverhalten einsetzt. Das Fahrzeugreferenzmodell kann dabei neutral oder untersteuernd ausgelegt sein. Die Eingangsgröße reduziert dabei auch den Wert der im Fahrzeugreferenzmodell modellierten Soll-Gierrate. Die so reduzierte Soll-Gierrate wird mit der gemessenen Ist-Gierrate verglichen, wobei nach Maßgabe des Vergleichsergebnisses in der ESP Regelung ein zusätzliches Giermoment berechnet wird. Die Soll-Gierrate erzeugt durch die Begrenzung der Eingangsgrößen die erzwungene Regelung in Richtung eines untersteuernden Fahrverhaltens des Fahrzeugs durch einen ESP Übersteuereingriff. Bei einem ESP Übersteuereingriff wird in mindestens die kurvenäußere Vorderrabbremse Bremsdruck eingesteuert. Nach einem weiteren Ausführungsbeispiel kann zu der Soll-Gierrate auch ein Offsetwert, der beispielsweise Geschwindigkeitsabhängig ist, addiert werden. Der Verlauf des Gierratenoffsets kann weiterhin querbeschleunigugsabhängig derart ausgebildet werden, daß er bei höheren Querbeschleunigungswerten größer dimensioniert wird. Die Untersteuertendenz des Fahrzeugs wird hierdurch verstärkt.

Vorteilhaft bleiben die ESP-Regelalgorithmen unverändert. Der in der kippkritischen Situation initiierte Übersteuereingriff veranlaßt das Fahrzeug zu einem untersteuernden Fahrverhalten. Darüber hinaus erfolgen durch die Maßnahmen im Bereich hoher Querbeschleunigung keine Untersteuereingriffe, die das Fahrzeug wieder in den neutralen Bereich führen, da diese Untersteuereingriffe die Kippgefahr erhöhen.

1. Beschreibung der Erfindung

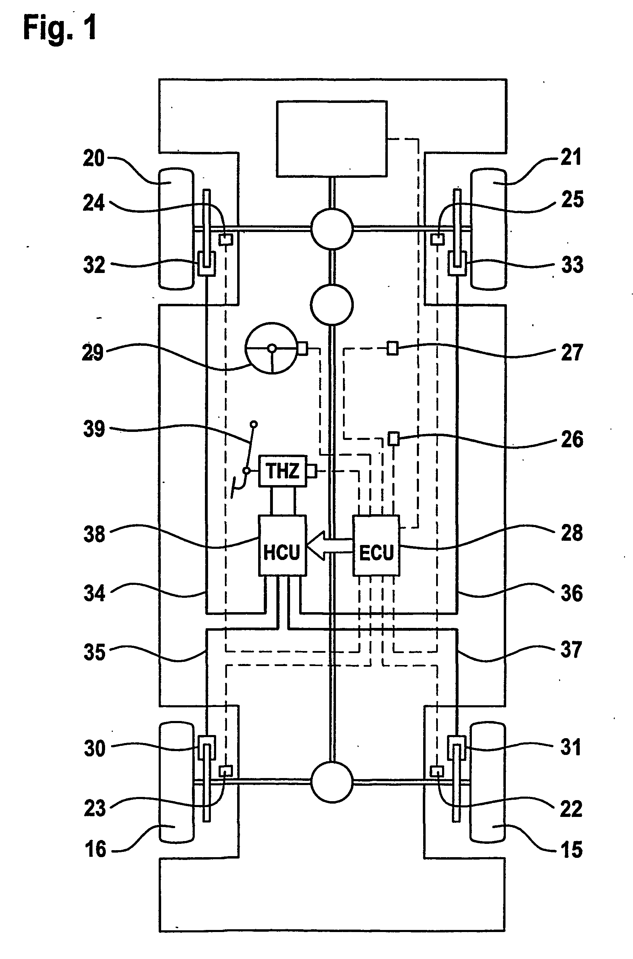

In der Figur 1 ist ein Fahrzeug mit ESP-Regelungssystem, hydraulischer Bremsanlage, Sensorik und Kommunikationsmöglichkeiten schematisch dargestellt. Selbstverständlich kann die Bremsanlage auch als elektro-hydraulische oder elektromechanische Bremse ausgebildet sein. Die vier Räder sind mit 15, 16, 20, 21 bezeichnet. An jedem der Räder 15, 16, 20, 21 ist je ein Radsensor 22 bis 25 vorgesehen. Die Signale werden einer Elektronik-Steuereinheit 28 zugeführt, die anhand vorgegebener Kriterien aus den Raddrehzahlen die Fahrzeuggeschwindigkeit $v_{Ref}$ ermittelt. Weiterhin sind ein Gierratensensor 26, ein Querbeschleunigungssensor 27 und ein Lenkradwinkelsensor 29 mit der Elektronik-Steuereinheit 28 verbunden. Jedes Rad weist außerdem eine individuell ansteuerbare Radbremse 30 bis 33 auf. Diese Bremsen werden hydraulisch betrieben und empfangen unter Druck stehendes Hydraulikfluid über Hydraulikleitungen 34 bis 37. Der Bremsdruck wird über einen Ventilblock 38 eingestellt, wobei der Ventilblock von elektrischen Signalen fahrerunabhängig angesteuert wird, die in der elektronischen Steuereinheit 28 erzeugt werden. Über ein von einem Bremspedal betätigten Hauptzylinder kann von dem Fahrer Bremsdruck in die Hydraulikleitungen eingesteuert werden. In dem Hauptzylinder bzw. den Hydraulikleitungen sind Drucksensoren P vorgesehen, mittels denen der Fahrerbremswunsch erfaßt werden kann. Über eine Schnittstelle(CAN) ist die Elektronik-Steuereinheit mit dem Motorsteuergerät verbunden

Über das ESP-Regelungssystem mit Bremsanlage, Sensorik und Kommunikationsmöglichkeiten das die Ausstattungselemente

- vier Raddrehzahlsensoren
- Drucksensor (P)
- Querbeschleunigungssensor (LA)
- Gierratensensor (YR)
- Lenkradwinkelsensor (SWA)
- individuell ansteuerbare Radbremsen
- Hydraulik-Einheit (HCU)
- Elektronik-Steuereinheit (ECU)

aufweist, läßt sich eine Vorhersage einer kritischen Fahrsituation und vorzugsweise deren Vermeidung ohne zusätzliche Sensoren realisieren.

## 1.1 Gelöste Aufgabe

Die Zielrichtung für das vorgeschlagene Verfahren zur Kippverhinderung sollen quasistatische Kurvenmanöver sein, d.h. der Zustand des Fahrzeugs (Lenkwinkelvorgabe, Geschwindigkeit, Gierrate und Querbeschleunigung) ändert sich nur "langsam" und somit wird auch die Kipptendenz vergleichsweise "langsam" aufgebaut. Alle hydraulischen Maßnahmen können infolgedessen auch mit relativ kleinen zeitlichen Gradienten operieren.

Um die sich langsam aufbauende Kipptendenz abzubauen bzw. zu verhindern, muß - den vorgenannten Ausführungen folgend - die Fahrzeuggeschwindigkeit reduziert und/oder einer weiteren Erhöhung derselbigen rechtzeitig entgegengewirkt werden. Desweiteren sollte die Gierbewegung des Fahrzeugs (Gierrate) tendenziell verkleinert bzw. der weitere Aufbau behindert werden, so daß sich tendenziell durch die hydraulische Aktion des Verfahrens ein eher untersteuerndes Fahrzeugverhalten mit geringerer Querbeschleunigung einstellt. Neben der positiven Beeinflussung der Gierdynamik im Sinne der Reduktion der Querbeschleunigung ist auch die Behinderung eines weiteren Lenkwinkelaufbaus durch den Fahrer ein wichtiges Auslegungskriterium sein, um ihm eine Rückmeldung bzgl. der Situation zu geben und ihn eher zur Geschwindigkeitsreduktion zu veranlassen. Dies wird durch die Erzeugung eines eher untersteuernden Fahrverhaltens in gleicher Weise erreicht.

Das vorgeschlagene Verfahren verwendet im wesentlichen die Regelalgorithmen des ESP und modifiziert diese in der quasistationären, kipprelevanten Situation geeignet, um den genannten Anforderungen gerecht zu werden. Hierbei wird im Rahmen der Sollwertbildung für das Gierverhalten des Fahrzeugs und somit die Querbeschleunigung des Referenzmodells (lineares Einspurmodell für Querdynamik) auf einen bestimmten Wert begrenzt, sofern ein quasistationäres Fahrzeugverhalten bei hohem Querbeschleunigungsniveau erkannt wurde. Durch diese Begrenzung wird auch das Sollgierverhalten des Fahrzeugs auf einen Wert limitiert, so daß bei entsprechend hoher, realer Gierrate des Fahrzeugs auf eine übersteuernde Situation erkannt wird, die im Sinne der ESP Eingriffslogik einen Druckaufbau am kurvenäusseren Vorderrad nach sich zieht. Das reale Fahrzeugverhalten kann dagegen in dieser Situation noch neutral oder sogar schon untersteuernd sein. Ein möglicherweise im Rahmen der nicht modifizierten ESP Sollwertbildung hier schon eingeleiteter Untersteuereingriff wird dadurch tendentiell verhindert. Dies ist wichtig, da der Untersteuereingriff (Druckaufbau am kurveninneren Hinterrad) zwar der Spurhaltung förderlich ist (Gierrate wird erhöht), jedoch die Kipptendenz verstärkt.

Durch den geschilderten Druckaufbau des ESP Übersteuereingriffs in der kipprelevanten Situation wird den geforderten Zielkriterien für das kippverhindernde Verfahren genüge getan, d.h. es wird ein eher untersteuernder, lenkbehindernder und gebremster, d.h. geschwindigkeitsreduzierter Fahrzeugzustand erzeugt. Hier wirkt das eingebrachte Giermoment, der durch die Bremsung hervorgerufenen Eindrehtendenz des Fahrzeugs entgegen. Vorteilhaft ist weiterhin, dass einer Verschärfung der Situation durch den Fahrer (Erhöhung des Lenkwinkels oder weitere Steigerung der Fahrzeuggeschwindigkeit und damit Erhöhung der Gierrate des Fahrzeugs, sowie Differenz zur begrenzten Sollgierrate) mit einem erhöhten Druckaufbau entgegengewirkt wird. Ebenso beendet ein geeignetes Rücklenken des Fahrers oder Abbremsen den Eingriff.

## 1.2 Lösungselemente

Die wichtigsten-Lösungselemente sind die Erkennung der kipprelevanten quasistationären Situation, die Art der Aufrechterhaltung der modifizierten ESP Regelung und der Querbeschleunigungsbegrenzung des ESP Referenzmodells.

1.2.1 Erkennung der kipprelevanten Kurvensituation und Aufrechterhaltung der modifizierten ESP-Regelung

Die Beeinflussung des ESP Referenzmodells wird eingeleitet, wenn

a) die Fahrzeuggierbeschleunigung kleiner ist als ein Grenzwert (vorzugsweise 20 bis 30 Grad/s$^2$)
b) die Lenkwinkelgeschwindigkeit kleiner ist als ein Grenzwert (vorzugsweise 100 bis 200 Grad/s)
c) die Fahrzeugquerbeschleunigung einen Grenzwert überschreitet (vorzugsweise 7 bis 8 m/s$^2$)
d) keine ESP Regelung stattfindet

Außerhalb einer aktiven ESP Regelung wird die Beeinflussung des Referenzmodells abgebrochen, wenn die Bedingungen a) oder b) verletzt werden oder die unter c) genannte Querbeschleunigungsgrenze um einen bestimmten Wert unterschritten wird (Hysterese vorzugsweise 1 bis 2 m/s$^2$). In einer weiteren Ausführungsform wird für die Erkennung auf die Bedingungen a) und b) verzichtet.
Bei aktiver ESP Regelung wird die Beeinflussung des ESP Referenzmodells nur bei Beendigung der Regelung abgebrochen.

1.2.2 Beeinflussung der Berechnung des ESP Referenzmodells

Der Querbeschleunigungszustand des Referenzmodells bestimmt sich nach folgendem Zusammenhang :

$$(\dot{\psi} + \dot{\beta})\, v = a_q \qquad\qquad\qquad (1)$$

mit

$\dot{\psi}$ - Gierrate des Fahrzeugs
$\dot{\beta}$ - Schwimmwinkelgeschwindigkeit des Fahrzeugs
$v$ - Fahrzeuggeschwindigkeit
$\alpha_q$ - Fahrzeugquerbeschleunigung

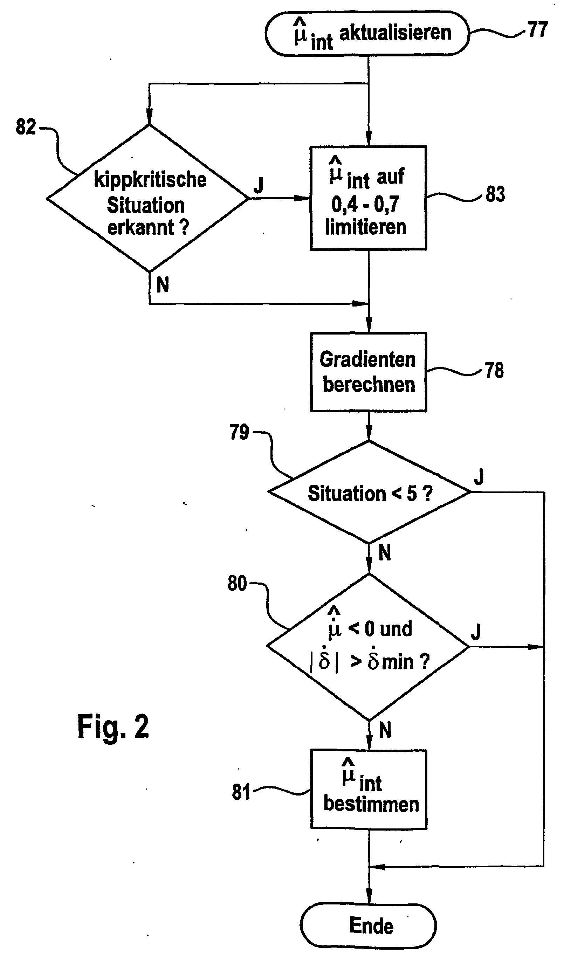

Bei begrenztem Referenzmodell wird der Zustand des Referenzfahrzeugs unter der Nebenbedingung berechnet, dass eine Querbeschleunigungsgrenze von vorzugsweise 4 bis 6 m/s$^2$ nicht überschritten wird (Werte müssen Ein- und Austrittschwelle des ESP Regelalgorithmus mit berücksichtigen).
Eine bevorzugte Umsetzungsmöglichkeit dieser Nebenbedingung ist in Figur 2 dargestellt. Sie besteht darin, den von den ESP Algorithmen berechneten, aktuellen und den initialen Reibwert der Fahrbahn $\mu$ und auf einen oberen Grenzwert zu limitieren (vorzugsweise 0,4 bis 0,6), damit das absetzbare Querkraftniveau und damit das Querbeschleunigungsniveau $\alpha_q$ nach

$$a_{q,grenz} = \mu\, g \qquad\qquad\qquad (2)$$

(Kraftgleichgewicht am Fahrzeug in Querrichtung) rechnerisch zu begrenzen. Mit g ist die Erdbeschleunigung gemeint (9,81 m/s$^2$).
Figur 2 zeigt einen Ausschnitt eines Flußdiagramms zur Aktualisierung eines interen Reibwertes.
Eine aktuelle Reibwertbestimmung erfolgt nur dann, wenn der ESP Regler in die Regelung eintritt. Damit der ESP Regler in die Regelung eintritt, wird ein begrenzter initialer Reibwert bei erkannter kipprelevanter Fahrsituation (mindestens eine der unter 1.2.1 genannten Bedingungen a) bis d) ist erfüllt) vorgegeben. Da bei Regeleintritt aber zunächst noch kein abgeschätzter Reibwert vorhanden ist, wird auch zu Beginn der Regelung der begrenzte initiale Reibwert $\mu$ = 0,4 bis 0,7 gesetzt. Spricht die ESP Regelung aufgrund einer augenblicklichen Fahrsituation an, so ist davon auszugehen, daß sich das Fahrzeug zumindest in der Nähe des Grenzbereiches zu kippkritischen Fahrsituationen befindet. Somit kann durch eine Betrachtung der aktuellen Meßgrößen am Fahrzeug auf den momentanen Fahrbahnreibwert geschlossen werden. Die Bestimmung des Reibwerts erfolgt erstmals bei Eintritt in die Regelung, verbunden mit einer sich anschließenden Aktualisierungsphase für die Begrenzung der Soll-Gierrate auf physikalisch sinnvolle Werte. Dabei wird - ausgehend vom ursprünglich vorgegebenen Reibwert $\mu$ = 0,4 bis 0,7 - beim Regelungseintritt ein maximaler Reibwert $\hat{\mu}$ bestimmt, der dann der Berechnung des zusätzlichen Giermomentes $M_G$ zugrundegelegt wird.

Dazu wird zunächst ein interner Reibwert $\hat{\mu}_{int}$ aus der gemessenen Querbeschleunigung $a_{quer}$ und einem berechneten Wert für die Längsbeschleunigung $a_{long}$ berechnet, der unter der Annahme, daß eine vollständige Kraftschlußausnutzung vorliegt, dem momentanen Reibwert entspricht. Da aber davon ausgegangen werden muß, daß beim Regelungseintritt der maximale Kraftschluß noch nicht erreicht ist, wird dem internen Reibwert $\hat{\mu}_{int}$ mittels einer Tabelle, einer Kennlinie oder eines konstanten Faktors ein höherer Reibwert $\hat{\mu}$ zugeordnet. Dieser Reibwert $\hat{\mu}$ wird dann der Regelung zugeführt. Somit ist es möglich, im nächsten Rechenschritt mit einer an den Fahrbahnreibwert angepaßten Soll-Gierrate zu rechnen und die Regelung zu verbessern. Der interne Reibwert wird nach der Beziehung

$$\hat{\mu}_{int} = \frac{\sqrt{a_{quer}^2 + a_{long}^2}}{g} \qquad\qquad (3)$$

bestimmt, mit $\alpha_{quer}$=Querbeschleunigung und
$\alpha_{long}$=Zängsbeschleunigung.

Auch während die ESP Regelung auf das Fahrzeug einwirkt, muß der geschätzte Reibwert weiter aktualisiert werden, da sich während der Regelung eine Reibwertänderung einstellen könnte.

Die Kriterien für eine Aktualisierung des internen Reibwerts $\hat{\mu}_{int}$ sind in Fig. 2 dargestellt. Im Feld 77 wird die Aktualisierung des nach Beziehung (3) bestimmten internen Reibwerts $\hat{\mu}_{int}$ gestartet. Wird in Raute 82 eine kippkritische Situation - wie zuvor beschrieben - erkannt, wird in Schritt 83 der interne Reibwert limitiert, wenn $\hat{\mu}_{int}$ =0,4 bis 0,7 erreicht. Liegt keine kippkritische Situation vor, wird der interne Reibwert unbegrenzt berechnet.

Ausgehend von dem bei erkannter kippkritischer Fahrsituation limitierten internen Reibwert, werden in Schritt 78 die zeitlichen Ableitungen der zuvor gebildeten geschätzten Reibwerte $\hat{\mu}$ oder $\hat{\mu}_{int}$ sowie des Lenkwinkels $\delta$ gebildet.

Wenn dann in Raute 79 erkannt wird, daß das Fahrzeug weder stillsteht noch geradeausfährt, daß also eine der Situationen <6> bis <9> (6=Rückwärtsfahrt, 7=konstante Kurvenfahrt, 8=beschleunigte Kürvenfahrt,9=verzögerte Kurvenfahrt) vorliegt, so werden die Ergebnisse aus Schritt 78 in Schritt 80 ausgewertet. Nur dann, wenn ein sinkender Reibwert nicht auf ein Lenkmanöver zurückzuführen ist, wird eine Reibwertbestimmung vorgenommen. Keine Reibwertaktualisierung erfolgt, wenn entweder das Fahrzeug sich bei einer Geradeausfahrt - vorwärts oder rückwärts - oder im Fahrzeugstillstand befindet oder aber ein Absinken des geschätzten Reibwertes $\hat{\mu}$ auf ein Lenkmanöver zurückzuführen ist.

## Patentansprüche

1. Verfahren zum Modifizieren einer Fahrstabilitätsregelung eines Fahrzeugs, bei dem die im wesentlichen aus dem vorgegebenen Lenkwinkel ($\delta$) und der Fahrgeschwindigkeit (v) bestehenden Eingangsgrößen aufgrund eines durch Fahreigenschaften bestimmten Fahrzeugmodells in einen Sollwert der Gierwinkelgeschwindigkeit ($\dot{\psi}_{soll}$) umgerechnet und dieser mit einem gemessenen Istwert der Gierwinkelgeschwindigkeit ($\dot{\psi}_{mess}$) verglichen wird, wobei nach Maßgabe des Vergleichsergebnisses in einem ESP Regler ein zusätzliches Giermoment ($M_G$) berechnet wird, welches zur Festlegung eines ESP-Eingriffs dient, der über in die Radbremsen des Fahrzeugs eingesteuerte Druckgrößen ein Zusatzgiermoment erzeugt, welches die gemessene Gierwinkelgeschwindigkeit ($\dot{\psi}_{mess}$) zu der errechneten Gierwinkelgeschwindigkeit ($\dot{\psi}_{soll}$) hinführt, wobei ein modellbasierter Reibwert ermittelt wird, dessen Ausgangssignale ($\mu$) dem Fahrzeugmodell zugeführt werden und damit bei der Berechnung des Sollwerts der Gierwinkelgeschwindigkeit ($\dot{\psi}_{soll}$) berücksichtigt wird, **dadurch gekennzeichnet, daß** der Reibwert in Abhängigkeit von Größen, die mindestens eine Grenzquerbeschleunigung oder davon abgeleitete Größen wiedergeben, dann auf einen Wert unterhalb des maximal zulässigen Reibwertes ($\mu_{max}$) begrenzt wird, wenn eine kippkritische Situation erkannt wird.

2. Verfahren nach Anspruch 1, **dadurch gekennzeichnet, daß** der Reibwert auf Werte zwischen 0,4 und 0,7, vorzugsweise 0,4 und 0,6, begrenzt wird.

3. Verfahren nach Anspruch 1 oder 2, **dadurch gekennzeichnet, daß** der Reibwert begrenzt wird, wenn mindestens eine der Bedingungen erfüllt ist:

   Eine Fahrzeuggierbeschleunigung ist kleiner als ein Grenzwert, vorzugsweise kleiner 20 bis 30 Grad/s$^2$.
   Eine Lenkwinkelgeschwindigkeit ist kleiner als ein Grenzwert, vorzugsweise kleiner 100 bis 200 Grad/s.
   Eine Fahrzeugquerbeschleunigung überschreitet einen Grenzwert, vorzugsweise 7 bis 8 m/s$^2$.

Es findet keine ESP Regelung statt.

4. Verfahren nach einem der Ansprüche 1 bis 3, **dadurch gekennzeichnet, daß** der ESP-Eingriff als ESP-Übersteuereingriff erfolgt.

5. Verfahren nach Anspruch 4, **dadurch gekennzeichnet, daß** der ESP-Übersteuereingriff bei neutralem oder untersteuerndem Fahrverhalten erfolgt.

6. Verfahren zur Kippverhinderung eines Fahrzeugs um seine Längsachse **gekennzeichnet durch** die Merkmale nach einem der Ansprüche 1 bis 5.

7. Einrichtung zur Kippverhinderung eines Fahrzeugs um seine Längsachse, **gekennzeichnet durch** eine ESP Regelung, die bei einem nach ESP Kriterien noch stabilen Fahrverhalten eines Fahrzeugs nach Maßgabe einer Begrenzung einer Eingangsgröße eines die Fahreigenschaften bestimmenden Referenzmodells nach einem der Ansprüche 1 bis 6 in die Regelung eintritt.

8. Einrichtung nach Anspruch 7, **dadurch gekennzeichnet, daß** die Eingangsgröße der Reibwert und/oder die Querbeschleunigung und/oder die Lenkwinkelgeschwindigkeit ist.

**Claims**

1. Method for modifying a driving stability controller of a vehicle, in which the input variables, composed essentially of the predefined steering angle ($\delta$) and the velocity (v), are converted into a setpoint value of the yaw angle speed ($\dot{\psi}_{setp}$), on the basis of a vehicle model determined by means of driving properties, and said yaw angle speed ($\dot{\psi}_{setp}$) is compared with a measured actual value of the yaw angle speed ($\dot{\psi}_{meas}$), wherein, in accordance with the comparison result, an additional yaw moment ($M_G$) is calculated in an ESP controller and serves to define an ESP intervention which generates an additional yaw moment by means of pressure variables applied to the wheel brakes of the vehicle, which additional yaw moment adjusts the measured yaw angle speed ($\dot{\psi}_{meas}$) to the calculated yaw angle speed ($\dot{\psi}_{setp}$), wherein a model-based coefficient of friction is determined, the output signals ($\mu$) of which are fed to the vehicle model, and are therefore taken into account in the calculation of the setpoint value of the yaw angle speed ($\dot{\psi}_{setp}$), **characterized in that** when a situation which is critical in terms of tilting is detected, the coefficient of friction is limited to a value below the maximum permissible coefficient of friction ($\mu_{max}$) as a function of variables which represent at least one limiting lateral acceleration or variables derived therefrom.

2. Method according to Claim 1, **characterized in that** the coefficient of friction is limited to values between 0.4 and 0.7, preferably 0.4 and 0.6.

3. Method according to Claim 1 or 2, **characterized in that** the coefficient of friction is limited if at least one of the conditions is met:

   a vehicle yaw acceleration is less than a limiting value, preferably less than 20 to 30 degrees/s$^2$,
   a steering angle speed is less than a limiting value, preferably less than 100 to 200 degrees/s,
   a vehicle lateral acceleration exceeds a limiting value, preferably 7 to 8 m/s$^2$, and
   no ESP control takes place.

4. Method according to one of Claims 1 to 3, **characterized in that** the ESP intervention takes place as an ESP oversteering intervention.

5. Method according to Claim 4, **characterized in that** the ESP oversteering intervention takes place in the case of neutral or understeering driving behaviour.

6. Method for preventing tilting of a vehicle about its longitudinal axis, **characterized by** the features according to one of Claims 1 to 5.

7. Device for preventing tilting of a vehicle about its longitudinal axis, **characterized by** an ESP controller which starts to control in the event of a driving behaviour of a vehicle which is still stable according to ESP criteria, in accordance with a limitation of an input variable of a reference model which determines the driving properties, according to one of Claims 1 to 6.

**8.** Device according to Claim 7, **characterized in that** the input variable is the coefficient of friction and/or the lateral acceleration and/or the steering angle speed.

## Revendications

**1.** Procédé de modification de la régulation de la stabilité de conduite d'un véhicule, selon lequel les grandeurs d'entrée, composées pour l'essentiel de l'angle de direction ($\delta$) prédéfini et de la vitesse de déplacement (v), sont converties en une valeur de consigne de la vitesse d'angle de lacet ($\psi_{soll}$) en se basant sur un modèle de véhicule défini par des propriétés de conduite et celle-ci est comparée avec une valeur réelle mesurée de la vitesse d'angle de lacet ($\psi_{mess}$), un moment de lacet ($M_G$) supplémentaire étant calculé dans un régulateur ESP d'après les indications du résultat de la comparaison, lequel sert à définir une intervention de l'ESP qui génère, par le biais de grandeurs de pression injectées dans les freins de roue du véhicule, un moment de lacet supplémentaire qui amène la vitesse d'angle de lacet mesurée ($\psi_{mess}$) à la vitesse d'angle de lacet calculée ($\psi_{soll}$), un coefficient de friction basé sur un modèle étant déterminé, dont les signaux de sortie ($\mu$) sont acheminés au modèle de véhicule et ainsi pris en compte lors du calcul de la valeur de consigne de la vitesse d'angle de lacet ($\psi_{soll}$), **caractérisé en ce que** le coefficient de friction est limité en fonction de grandeurs qui reproduisent au moins une accélération transversale limite ou de grandeurs qui en sont dérivées, puis à une valeur au-dessous du coefficient de friction maximum autorisé ($\mu_{max}$) lorsqu'une situation à la limite du basculement est détectée.

**2.** Procédé selon la revendication 1, **caractérisé en ce que** le coefficient de friction est limité aux valeurs entre 0,4 et 0,7, de préférence 0,4 et 0,6.

**3.** Procédé selon la revendication 1 ou 2, **caractérisé en ce que** le coefficient de friction est limité lorsqu'au moins l'une des conditions ci-après est remplie :

une accélération de lacet du véhicule est inférieure à une valeur limite, de préférence inférieure à 20 à 30 degrés/s$^2$ ;
une vitesse d'angle de direction est inférieure à une valeur limite, de préférence inférieure à 100 à 200 degrés/s ;
une accélération transversale du véhicule dépasse une valeur limite, de préférence 7 à 8 m/s$^2$ ;
une régulation ESP n'a pas lieu.

**4.** Procédé selon l'une des revendications 1 à 3, **caractérisé en ce que** l'intervention de l'ESP s'effectue sous la forme d'une intervention de survirage de l'ESP.

**5.** Procédé selon la revendication 4, **caractérisé en ce que** l'intervention de survirage de l'ESP s'effectue lors d'un comportement de conduite neutre ou en sous-virage.

**6.** Procédé pour empêcher le basculement d'un véhicule autour de son axe longitudinal, **caractérisé par** les caractéristiques selon l'une des revendications 1 à 5.

**7.** Dispositif pour empêcher le basculement d'un véhicule autour de son axe longitudinal, **caractérisé par** un régulateur ESP qui, en présence d'un comportement de conduite d'un véhicule encore stable d'après les critères de l'ESP, intervient dans la régulation selon l'une des revendications 1 à 6 d'après l'indication d'une limitation d'une grandeur d'entrée d'un modèle de référence qui détermine les propriétés de conduite.

**8.** Dispositif selon la revendication 7, **caractérisé en ce que** la grandeur d'entrée est le coefficient de friction et/ou l'accélération transversale et/ou la vitesse d'angle de direction.

# Fig. 1

$\hat{\mu}_{int}$ aktualisieren — 77

82 — kippkritische Situation erkannt ?

J → $\hat{\mu}_{int}$ auf 0,4 - 0,7 limitieren — 83

N

Gradienten berechnen — 78

79 — Situation < 5 ? — J

N

80 — $\hat{\dot{\mu}} < 0$ und $|\dot{\delta}| > \dot{\delta}$ min ? — J

N

81 — $\hat{\mu}_{int}$ bestimmen

**Fig. 2**

Ende

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5671143 A
- DE 4446582 A1